# EUROPEAN PATENT SPECIFICATION

(11) **EP 2 360 802 B1**
(45) Date of publication and mention of the grant of the patent: **23.11.2016**
(21) Application number: 10001764.9
(22) Date of filing: 22.02.2010
(51) Int. Cl.: H02G 15/00, H02G 15/06, G02B 6/38, H01R 13/453

(54) **Protective device and cable termination unit**
Schutzvorrichtung und Kabelabschlusseinheit
Dispositif protecteur et unité de terminaison de câble

(43) Date of publication of application: 24.08.2011
(73) Proprietor: Tyco Electronics Raychem BVBA, 3010 Kessel-Lo (BE)
(72) Inventor: Bellekens, Kathleen, 3020 Winksele-Delle (BE); Vastmans, Kristof, 3370 Boutersem (BE); Schurmans, Eric, 3450 Hogen-Geetbets (BE)
(74) Representative: Grünecker Patent- und Rechtsanwälte PartG mbB

(56) References cited:
- EP-A1- 1 180 702
- JP-A- 2005 227 330
- JP-A- 2008 233 466
- US-A- 5 037 319
- US-B1- 7 648 375

## Description

The present invention, which finds preferably application in the field of telecommunications technology, relates to a protective device for a cable connector part and to a cable termination unit provided with the protective device.

In the sense of the present invention, a cable connector part may preferably be a plug or an associated mating plug, which are used for connecting together signal transmitting elements such as copper wires, optical fibre elements and the like, wherein the signal transmitting element forms part of a cable generally providing an outer jacket for guiding and protecting the signal transmitting element form environmental influences.

During handling of a cable connector part connected to a cable end, an exposed end portion of the signal transmitting element and a portion of the cable connector part may be damaged due to a missing of a respective mechanical protection. Consequently, during mating of two cable connector parts, the damaged signal transmitting element and/or the damaged portion of the cable connector part may impede a matching up with the associated cable connector part and signal transmitting element, respectively. Thus, the cable connector parts and the signal transmitting elements may not be properly seated. That is, the signal transmitting element may be slightly displaced with respect to the complementary signal transmitting element of the mating cable connector part, whereby a reliable contact and signal transmission therebetween cannot be provided.

For avoiding such a risk, protective devices such as caps or protective flaps for plugs or mating plugs have been proposed. Based on said means, an end portion of the signal transmitting element in the unconnected state of the respective cable connector part can be protected. However, for connecting the cable connector part with a mating cable connector part, removal of the cap involves an additional step, whereas the flap refers to a complex mechanism for the cable connector part.

EP 1 180 702 B1 proposes a protective device for a cable connector part according to the preamble of claim 1, wherein said protective device is provided for solving the problem attended, for instance, by the cap and the flap.

Particularly, the cable connector part provides a housing for supporting and connecting a signal transmitting element. The housing is adapted to movably support a slide used as the protective device. The slide inserted in the housing is movable in a direction corresponding to a connection direction of the cable connector part. In an unconnected state of the cable connector part, the slide projects a front part of the housing, which corresponds to a first position, to protect mechanically a connectable end portion of the cable connector part. In a connected state of the cable connector part, the slide is pushed backwards in connection direction, i.e. in sliding direction and is held in a second position in which the connectable end portion is accessibly exposed to allow connection between the signal transmitting element guided and supported by the cable connector part and a signal transmitting element of a mating cable connector part. Accordingly, the known protective device is particularly suited for protecting an end portion of the signal transmitting element supported by the cable connector part. Hence, the cable connector part itself cannot be protected by the protective device. Therefore, during handling of the cable connector part, respective care is required to prevent damage thereof.

A further protective device for a cable connector part is known from JP 2005227330 according to the preamble of claim 1.

It is an object of the present invention to provide an improved protective device for a cable connector part, wherein the protective device comprises a protective cover for protecting the cable connector part in a first position and for exposing accessibly a connectable end portion of the cable connector part in a second position, and to provide a cable termination unit provided with the protective device.

The above object is solved by a protective device having the features of claim 1. The inventive protective device comprises a protective cover which is adapted to be movable between a first position and a second position, wherein, in the first position, the protective cover is adapted to protect the cable connector part, and wherein, in the second position, the protective cover is adapted to accessibly expose at least a connectable end portion of the cable connector part. A connectable end portion refers to a free end portion of the cable connector part which is provided for receiving and being connectable to a mating free end portion of an associated cable connector part. The protective device provides a stationary support which comprises a first support portion for supporting the cable connector part and a second support portion for slidably supporting the protective cover between the first position and the second position. Preferably, the first support portion may stationary support the cable connector part in a manner commonly known in the technical field of cable connector. Further preferable, the cable connector part is securely supported by the first support portion. The protective device provides positive locking means which are effective between the protective cover and the stationary support to secure the protective cover in the first position. The sliding direction preferably extends in parallel to a connection direction for connecting the cable connector part to a mating cable connector part. The protective cover is further adapted to cover in the first position the lateral sides of the cable connector part extending in parallel to the sliding direction. Accordingly, the protective cover has preferably a shape suited for covering an outside of the cable connection part without restricting a movement of the protective cover in sliding direction. That is, the protective cover provides in sliding direction an opening through which the connectable end portion of the cable connector part passes, when the protective cover is moved from the first position toward the second position. The protective cover is preferably cross-sectionally U-shaped, wherein the second support portion supporting the protective cover forms a guide rail adapted to guide the U-shaped protective cover in sliding direction. The protective device may be preferably formed by injection molding of a plastic material. Alternatively, the stationary support may be preferable formed by injection molding of a plastic material, whereas the protective cover may be preferably formed of a metal or ceramic component.

According to the inventive protective device, not only the signal transmitting element may be protected in the first position, but preferably the whole cable connector part may be protected by the protective cover. In general, the protective cover is preferably adapted to provide a protection for the cable connector part sufficient to mechanically protect at least an uncovered portion of the cable connector part in its supporting state, i.e. in a state in which the cable connector part is supported by the first support portion of the stationary support. Thereby, the protective device with the cable connector part may be handled in the unconnected state of the cable connector part without risk of damaging it.

Preferred embodiments of the protective device are subject to the dependent claims 2 to 8.

According to one preferred embodiment having the features of claim 2, the protective cover may be reliably retained on the second support portion in sliding direction, thereby preventing a slipping off of the protective device from the second support portion.

In a further preferred embodiment according to claim 3, the interlock may be preferably supported by a spring or a means providing a spring load for pushing the interlock in the direction transverse to the sliding direction of the protective cover, wherein the interlock is allowed to move in a backward direction opposing the spring load direction by applying a pressing force onto the interlock. Alternatively, the interlock is preferably connected with one end side to the stationary support, preferably the second support portion, wherein the connected end provides a swivel axis for a free end of the interlock which opposes the connected end. Thereby, the shape of the stationary support can be kept simple, as a provision of spring means or the like can be avoided. Moreover, the interlock preferably provides abutment surfaces in sliding direction of the protective cover, which are adapted to co-operate with rim portions delimiting the first slot in said sliding direction, wherein the interlock has preferably a size in sliding direction corresponding to a size of the first slot in said direction. Thereby, the protective cover may be simply and reliably secured in the first position against the stationary support in sliding direction of the protective cover.

Further preferable, the interlock is hinged to the stationary support and a free end of the interlock is biased toward the protective cover. According thereto, the protective cover may be automatically secured releasably in the first position when the interlock is received by the first slot. Preferably, the interlock provides an outer inclined surface portion with one end connected to the stationary support to form a swivel axis for the free end. More preferably, the inclined surface portion of the interlock forms a continuation of the surface of the stationary support which ends at the free end of the inclined surface portion. Due to the inclined form of the interlock, abutment surfaces in sliding direction may be simply provided for abutting against the rim portions defining the first slot. The interlock may be preferably flat shaped. Particularly, the interlock may be preferably formed of a plate extending transverse from a surface of the stationary support toward the protective cover to protrude into the first slot of the protective cover. Alternatively, the interlock may have a cross-sectionally triangle shape with one apex forming the connected end and a further apex projecting the stationary support towards the protective cover. By forming the interlock integral with the stationary support, preferably with the second support portion, that is by connecting one end of the interlock with the stationary support, fewer parts are required and a simple shaped stationary support may be provided.

The preferred embodiment according to claim 5 comprises a second slot adjacent to the first slot to prevent sliding movement of the protective cover in the second position. Due to said configuration, the protective cover may be secured in the first and second positions by interaction of the first and second slots with one interlock, respectively. Alternatively, the first slot and the second slot may be preferably provided at opposing lateral sides of the protective cover, wherein a second interlock is required for engaging with the second slot. More preferable, the second slot is delimited in sliding direction by a first rim portion and a second rim portion, wherein the first rim portion preferably provides an axial abutment as the stop for the interlock to prevent sliding movement of the protective cover in the second position, preferably in the direction leading away from the first position. The design of the protective device may be further simplified thereby.

Further preferable, in the preferred embodiment according to claim 6, the rim portion, which corresponds to the second rim portion as described above, is preferably adapted to slide across the thereto opposing edge of the interlock during sliding movement of the protective cover, wherein the angle α is formed between the second rim portion and the opposing edge. The angle α is preferably set between 15° to 75°, more preferably between 30° and 60°. Generally, the angle α or the range for the angle α is selected such that a sliding of the second rim portion across the opposed edge may be reliably conductable without getting stuck and without requiring a large sized second slot. If the angle α is rather acute, hooking between the second rim portion and the opposed edge of the interlock is to be more likely, even though the size of the second slot in sliding direction may be decreased. Whereas, if the angle α is of a large value, a size of the second slot in sliding direction may be unnecessarily increased.

In a further preferred embodiment according to claim 7, the protective cover may be reliably retained on the stationary support. Preferably, the first slot and the second slot have each a longitudinal rim portion connecting the rim portions delimiting the first slot and the second slot in sliding direction, respectively. Moreover, the interlock provides at its free end side an abutment surface adapted to abut against at least one of the longitudinal rim portions of the first slot in the first position and of the second slot in the second position. Accordingly, the protective cover may be further retained in the first position and in the second position by the stationary support in a direction transverse to the sliding direction.

Preferably, the protective device provides at one or, further preferable, at further lateral sides, the configuration composed of the interlock, the first slot and the second slot, which are adapted to co-operate with each other as described above. More preferable, the protective device formed of a U-shape provides at opposing lateral sides the interlock, the first slot and the second slot, whereby a reliable securing of the protective cover in the first position and in the second position may be achieved.

According to a further preferred embodiment having the features of claim 8, the protective cover may be carried by the further engagement means in sliding direction, whereby the cable connector part to be supported by the stationary support may be automatically exposed and protected by sliding movement of the further engagement means. Accordingly, a handling of the protective device can be improved. The positive locking is preferably formed by a key-and-slot configuration, wherein one of the engagement portion and of the further engagement means provides the key and wherein the other one thereof provides the slot. More preferably, the engagement portion has a U-shape for providing the slot. Thus, the further engagement means may be formed of a simple shape, wherein an edge or a flange and the like already provided with the further means may be preferably used as the key.

In accordance with a further aspect of the present invention, a cable termination unit according to claim 9 is proposed. The stationary support of the protective device may preferably form a part of the first base. More preferably, at least one of the first support portion and the second support portion of the stationary support is integrally formed with the first base. Alternatively, the first base and at least one of the first support portion and the second support portion may be preferably provided as separate parts which are connectable together preferably by positive locking means such as a latching mechanism or the like, for instance. In general, the connection between the first base and the respective support portion of the stationary support may be preferably obtained by any connection means and method suitable for connecting at least two parts with each other. Further preferable, the protective device is arranged in sliding direction near a longitudinal, i.e. an axial end side of the first base, wherein the protective cover provides a front portion adapted to cover the cable connector part in the first position of the protective device, and a rear portion arranged adjacent to the front portion and being adapted to be displaceably supported by the second support portion at least in the first position. The front portion and the rear portion may be preferably further adapted to be supported by the second support portion in the second position of the protective cover. More preferably, the protective cover is U-shaped and the stationary support provides a guide rail for displaceably supporting the U-shaped protective cover in sliding direction.

The inventive cable termination unit comprising the protective device ensures a reliable mechanically protection of the cable connector part during handling of the cable termination unit. Thus, the cable termination unit provided with the cable connector part protected by the protective device may be further handled without running a risk of damaging the cable connector part and/or the signal transmitting element accommodated by the cable connector part.

Preferred embodiments of the inventive cable termination unit are subject to the dependent claims 10 to 14.

In one preferred embodiment of the cable termination unit according to claim 10, the protective cover may be moved in sliding direction while movement of the cover in said direction. According thereto, the cable connector part may be automatically exposed in the second position. Thus, an assembling of the cable termination unit may be simplified, as the cable connector part does not need to be exposed by a manually handling of the protective cover.

Preferably, the engagement portion of the protective device is formed at the rear portion of the protective cover, and further preferable in an area near a longitudinal free end side of the rear portion. Hence, the protective cover may be approximately fully covered by the cover.

In a further preferred embodiment of the cable termination unit according to claim 11, the cover may be used to release the interlock in the first position by moving the interlock from a securing position to a releasing position. The securing position of the interlock corresponds to a state in which a movement of the protective cover in sliding direction is prevented by positive locking between the interlock and the first slot. In other words, in the securing position, the interlock preferably projects into the first slot and provide an abutment in sliding direction for the rim portions defining the first slot in the sliding direction. The releasing position of the interlock refers to a state in which the protective cover is preferably freely movable in sliding direction. Particularly, in the releasing position, the interlock is pushed toward the stationary support so as to prevent projection of the interlock into the first slot. Preferably, in the releasing position, the interlock does not project into the first slot. Due to the configuration of the cover, the interlock may be released by mounting the cover onto the first base and the second base, respectively, wherein the further engagement means engages the engagement portion of the protective cover and at the same time extends into the first slot to push the interlock in the direction transverse to the sliding direction. Accordingly, the protective cover may be moved between the first position and the second position by a movement of the cover in sliding direction, while the interlock is urged into the releasing state due to the mounted state of the cover. Furthermore, a securing of the protective cover in the second position may be improved due to securing of the cover in said position against the first base and the second base, respectively. Further, by disassembling the cover from the first and second bases, preferably, in a reversed order as described above, the protective cover may be automatically moved from the second position towards the first position, and, after removing the cover form the first and second bases in the first position of the protective cover, the interlock snaps into the first slot to secure the protective cover.

A further preferred embodiment of the cable termination unit has the features as defined in claim 12. Said preferred embodiment is based on a different principle than the aforedescribed preferred embodiments which comprise a cover adapted to move the protective cover between the first position and the second position. Particularly, the first base and the second base are formed of separate parts and are adapted to be connectable to each other in sliding direction preferably by overlapping at least longitudinal (axial) end portions thereof which face each other. The overlapping is achieved by a sliding motion in sliding direction of the axial end sides of the first and second bases towards each other. The further engagement means provided with the extension arm is preferably formed of a pin projecting a surface of the extension arm, wherein the engagement portion of the protective cover is preferably formed of a recess at a lower side of the protective cover. Particularly, the recess is preferably provided at a front portion of the protective cover at its side near the surface of the first base. Further preferable, the lower side of the protective cover is spaced apart from a facing upper side surface of the first base by a distance adapted to receive the free end of the extension arm. The recess is preferably engageable from an outer side direction of the protective cover, which corresponds to a direction transverse to the sliding direction. The extension arm is elastically movable in the direction transverse to the sliding direction to allow engagement of the pin with the recess from the outer side of the protective cover. Disengagement of the pin from the recess may be preferable conducted in a reversed manner. In the engaged state of the further engagement means with the engagement portion, a positive locking is formed therebetween in sliding direction. Preferably, the pin is adapted to fit into the recess in sliding direction. Based thereon, a sliding movement of the first base and/or of the second base may be transmitted to the protective cover. Thereby, the protective cover may be automatically moved in sliding direction between the first position and the second position. Additionally, in the second position of the protective cover, the protective cover is secured in sliding direction by the engagement of the further engagement means and the engagement portion. Thus, same effects as described above with respect to the embodiment comprising the cover adapted to move the protective cover may be obtained.

According to a further preferred embodiment of the cable termination unit having the features as defined in claim 13, alignment of the first and second bases with respect to each other and engagement and disengagement between the further engagement means and the engagement portion may be achieved automatically by moving the first and second bases relatively to each other in sliding direction. Thereby, assembling of the first base to the second base and disassembling thereof can be further simplified. Preferably, the guiding recess provides a stop for the guiding protrusion in sliding direction, wherein said stop is adapted to stop a move of the first and second bases towards each other, when the protective cover reaches the second position. Further preferable, the guiding recess has a guiding length for guiding the guiding protrusion in sliding direction until the protective cover, moved due to engagement between the further engagement means and the engagement portion, reaches the second position. Additionally, the guiding protrusion has preferably a round shape and the extension arm provides at its longitudinal free end side a curved shaped base on which the further engagement means is provided, wherein the round shape and the curved shape are formed preferably by a radius adapted to co-operate with each other so as to allow an engagement and disengagement between the further engagement means and the engagement portion while moving the first and second bases relatively to each other in sliding direction either to connect or disconnect the first and second bases to or from each other, respectively. Thereby, the guiding protrusion may guide the extension arm smoothly in the direction transverse to the sliding direction with a further reduced risk of getting stuck.

In a further preferred embodiment of the cable termination unit comprising the features as defined in claim 14, the interlock can be automatically released and secured in the first position by movement of the first and second bases relatively to each other in the sliding direction. Thereby, an assembling of the cable termination unit can be further simplified. Preferably, the interlock is provided to engage the first slot at a lateral side of the protective cover which opposes the side comprising the engagement portion. Further preferable, the interlock is cross-sectionally L-shaped with a first leg extending in sliding direction and hinged to the first base, wherein the second leg is adapted to engage the further engagement means of the protective cover. More preferably, the first leg of the interlock projects partially the surface of the first base and provides a sliding surface adapted to slidably receive the second base to be elastically urged away from the protective cover while connection of the first base with the second base. According thereto, the interlock can be automatically released. By disconnection of the first base from the second base, the interlock can automatically engage the first slot to secure the protective cover, respectively. Preferably, the first slot and the engagement portion, which is preferably formed of a further recess portion, are spaced apart from the longitudinal end side of the protective cover by a similar distance. More preferably, the first slot and the engagement portion are of a similar shape. According thereto, a manufacturing of the protective cover can be simplified, whereby respective costs may be reduced.

The preferred embodiments of a protective device for the alternative preferred embodiments of the cable termination unit have been described by specific shapes adapted to achieve an automatically moving of the protective cover between the first position and the second position by means of the cover and the second base. Moreover, said shape is preferably adapted to perform an automatically securing and releasing of the protective cover in said positions, respectively, by engagement and disengagement between the protective cover, the interlock and the further engagement means provided with the cover or formed with the second base. However, a combination of the different shapes of the protective devices with respect to the preferred embodiments of the cable termination unit is also feasible, whereby a single protective device may be provideable for different cable termination units.

The present invention will now be described in further detail by referring to preferred embodiments depicted in the accompanying drawings. In these drawings:
- Fig. 1: shows a perspective side view of a cable termination unit comprising a protective device according to one embodiment;
- Fig. 2: shows a perspective side view of the cable termination unit as shown in Fig. 1 with a pair of covers in a pre-mounted state;
- Fig. 3: shows a perspective side view of the cable termination unit as shown in Fig. 2 with one cover in a mounted state and with the other cover in a secured state;
- Fig. 4: shows a cross-sectional view in longitudinal direction of the protective device provided on the cable termination unit as shown in Fig. 3 taken along the line IV-IV in said Figure;
- Figs. 5A-5C: show a schematically top view of a cable termination unit comprising a protective device according to a further embodiment;
- Fig. 6: shows a schematically cross-sectional view along the intersection line VI-VI of the cable termination unit as shown in Fig. 5B; and
- Fig. 7: shows a schematically cross-sectional view along the intersection line VII-VII of the cable termination unit as shown in Fig. 5B.

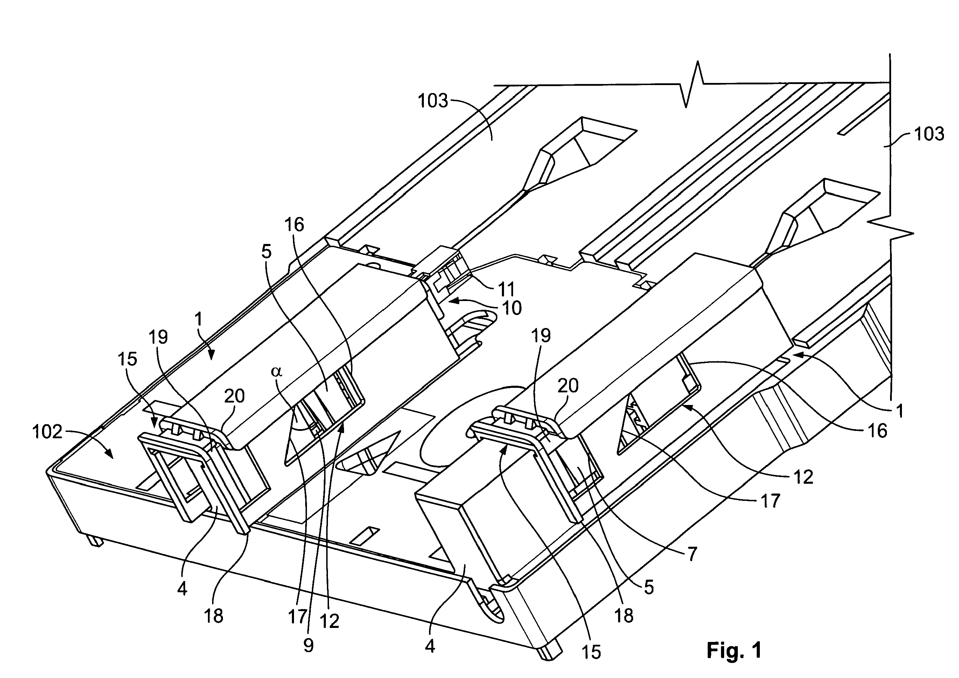

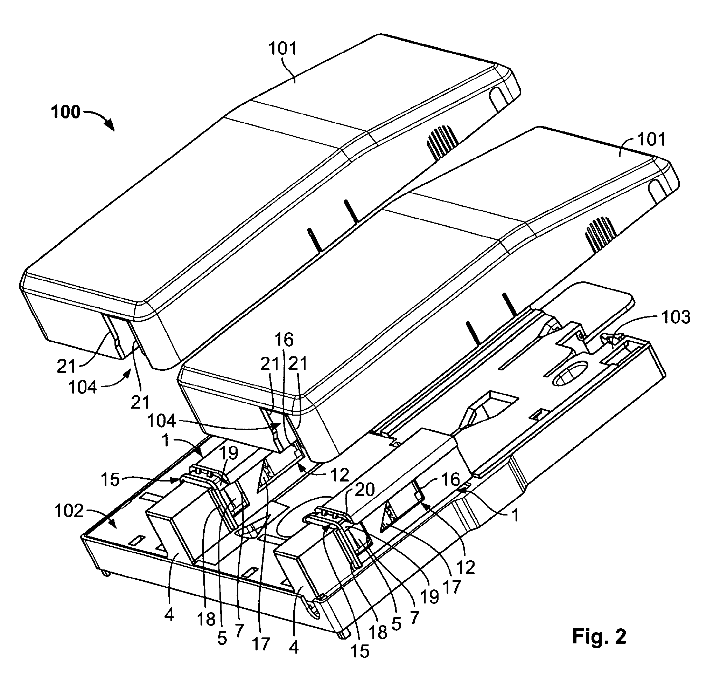

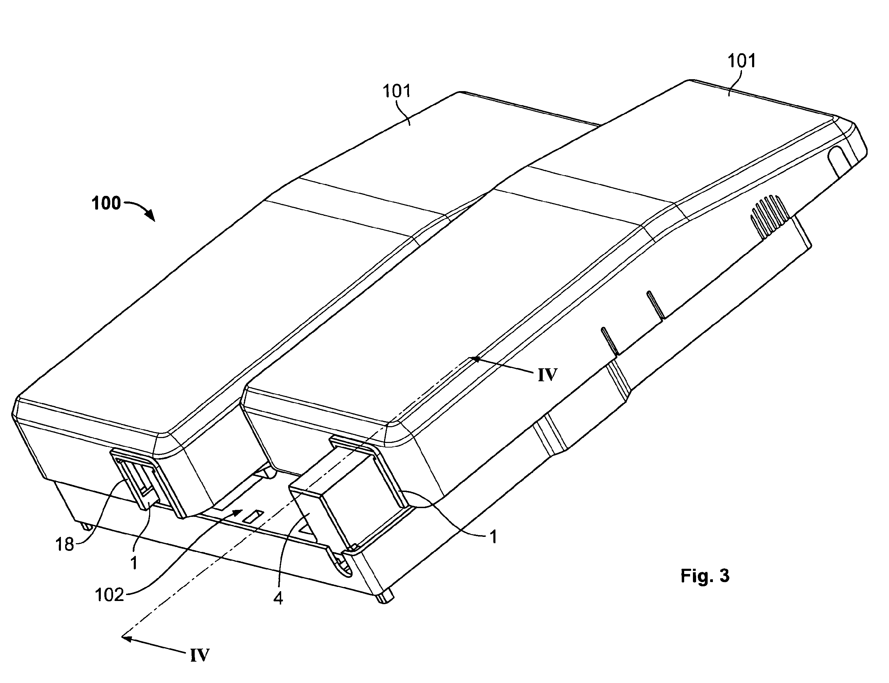

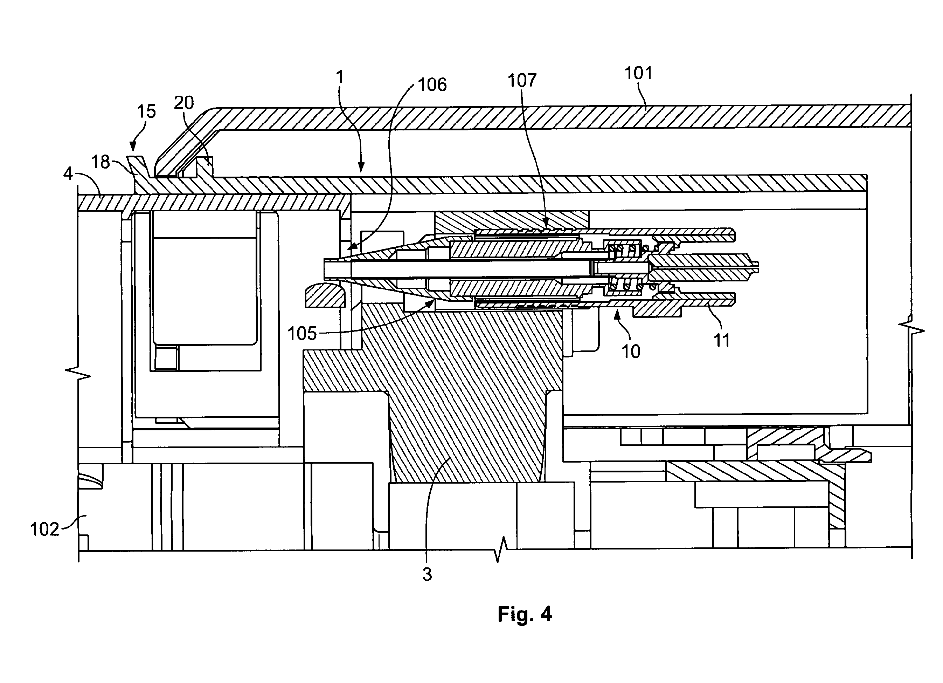

Figures 1 to 3 show a perspective side view of the cable termination unit 100 comprising the protective device according to a first embodiment, wherein Figure 4 shows a cross-sectional view in longitudinal direction of the protective device provided on the cable termination unit 100 as shown in Fig. 3, wherein a cover 101 is arranged on a first base 102 in a mounted state. Particularly, the cable termination unit 100 comprises the first base 102, a second base 103 connected to the first base 102 and a pair of covers 101 for covering a side of the first base 102 and the second base 103. The first base 102 provides on the side to be covered a pair of protective devices, wherein each protective device is adapted to be covered by a single cover 101. The pair of protective devices is disposed in parallel at a longitudinal end side of the first base 102, wherein the protective devices are spaced apart from each other in a direction transverse to the sliding direction by a predetermined distance. The protective devices are similar shaped. The protective device comprises a protective cover 1, which is movably supported by a stationary support 3, 4 to be movable between a first position for protecting a cable connector part 10 and a second position for accessibly exposing at least a connectable end portion 11 of the cable connector part 10. Specifically, Figure 1 shows the pair of protective devices, wherein the protective cover 1 of the right protective device is arranged in the first position, and the protective cover 1 of the left protective device is disposed in the second position. Figure 2 shows the pair of protective devices with the protective covers 1 arranged in the first position.

As shown in Figure 4, the stationary support 3, 4 comprises a first support portion 3 which supports the cable connector part 10 and a second support portion 4 which supports the protective cover 1 slidably relative to the stationary support 3, 4. The first support portion 3 and the second support portion 4, i.e. the stationary support 3, 4 are formed integrally with the first base 102. Particularly, the first support portion 3 and the second support portion 4 are arranged successively in longitudinal direction of the first base 102, wherein the first support portion 3 and the second support portion 4 overlap partially in sliding direction. The first support portion 3 provides a first passageway 105 extending in sliding direction for receiving and securing the cable connector part 10, which is formed of an optical fibre plug assembly. The first passageway 105 comprises holding means 107 in form of a contoured surface arranged opposite to each other and adapted to receive and hold in sliding direction the optical fibre plug assembly 10 which has an associated contoured surface at the sides opposing said holding means 107. Preferably, the contoured surface comprises a plurality of small bars spaced apart from each other by a predetermined distance and extending at the sides surrounding the passageway 105 in circumferential direction.

Moreover, the second support portion 4 provides a height with respect to a surface of the first base 102 larger than a height of the first support portion 3 to freely support slidably the protective cover 1 without being hindered by the first support portion 3 in longitudinal direction of the first base 102, which corresponds to a sliding direction of the protective cover 1 and also to a connection direction for connecting the cable connector part 10 to a mating cable connector part. The stationary support 4 has basically a rectangular block shape extending in longitudinal direction of the first base 102 from a longitudinal end side, i.e. an axial end side thereof towards the second base 103. The second support portion 4 provides inside an accommodating space for receiving and guiding a cable to which the cable connector part 10 is connected. At a side facing the first support portion 3, the second support portion 4 provides a second passageway 106 extending in sliding direction for guiding the cable toward the cable connector part 10. The passageway 106 may also be adapted to accommodate at least partially a rear portion of the cable connector part 10 which is connected to the cable. The outer surfaces of the second support portion 4 are flat shaped to provide sliding surfaces for the protective cover 1 being formed of a U-shape. Accordingly, the second support portion 4 provides a guide rail for the protective cover 1 to guide, and thereby support the protective cover 1 in longitudinal direction of the first base 102, i.e. in the sliding direction of the protective cover 1. The second support portion 4 provides at its lateral sides a recess portion 9 accommodating an interlock 5, which is elastically movable transverse to the sliding direction of the protective cover 1. The interlock 5 has an inclined surface portion with one end merging with a lateral side surface of the second support portion 4 and an opposing free end projecting the recess portion 9 toward the side facing the protective cover 1. The merging end forms thereby a swivel axis for the free end, whereby the interlock 5 may be pushed around the swivel axis toward the inside of the second support portion 3 and may move automatically backwards towards an outside of the second support portion 4 due to an elastic force caused by pushing the interlock 5 when moved from its rest position. The second support portion 4, i.e. the interlock 5 may be formed by injection molding of a plastic material or of other materials providing an elastic force. The interlock 5 is rectangular shaped and increases in thickness from the merging end towards the free end to provide the inclined surface.

The protective cover 1 is U-shaped and slidably mounted on the second support portion 4. As specifically shown in Figure 1, the protective cover 1 has a longitudinal length adapted to accessibly expose the cable connector part 10 with its connectable end portion 11 at last in the second position of the protective cover 1. The protective cover 1 provides at one longitudinal end side a flange 18 extending in circumferential direction of the protective cover 1. The flange 18 forms an abutment surface to be abuttable in sliding direction. The protective cover 1 comprises a first slot 7 at the lateral side and in longitudinal direction adjacent to the flange 18. The first slot 7 has a rectangular shape and is adapted to receive the interlock 5 in a fitted manner. In other words, in the first position of the protective cover 1 as shown in Figures 1 and 2, the interlock 5 fits into the first slot 7, wherein longitudinal end sides of the interlock 5 abut against longitudinal rim portions of the first slot 7. Thereby, a positive locking in sliding direction between the interlock 5 and the first slot 7 is obtained in the first position of the protective cover 1. The first slot 7 provides an entrance 19 at an upper side of the first slot 7, wherein the upper side corresponds to a far side of the first slot 7 with respect to the first base 102. Thereby, the first slot 7 is engageable from an upper side direction.

Additionally, the protective cover 1 provides on its upper side an engagement portion 15 having a U-shape, wherein the flange 18 forms one ridge of the U-shaped engagement portion 15, and wherein a further flange 20, provided opposed to the flange 18 on a top side of the protective cover 1, forms the opposing ridge for the U-shaped engagement portion 15. The further flange 20 forms part of a top of the protective cover 1, wherein the top forms a cap for covering upper portions of the lateral sides of the protective cover 1. A groove portion of the engagement portion 15 formed between the flange 18 and the further flange 20 merges at its circumferential end side in the entrance 19 of the first slot 7 in order to allow access to the entrance 19 from the upper side direction of the first base 102.

The protective cover 1 comprises at the lateral side of the first slot 7 a second slot 12, which is arranged in longitudinal direction of the protective cover 1 between the first slot 7 and the longitudinal end side adapted to cover the cable connector part 10 in the first position of the protective cover 1. The second slot 12 is defined in sliding direction by a first rim portion 16 and a second rim portion 17, wherein the second slot 12 is adapted to receive the interlock 5 in the second position of the protective cover 1. In other words, the first rim portion 16 and the second rim portion 17 are spaced apart in longitudinal direction by a distance adapted to receive the interlock 5 in the second slot 12. The first rim portion 16 extends perpendicular with respect to the surface of the first base 102. The second rim portion 17 extends transverse from the upper side of the protective cover 1 toward its lower side and simultaneously towards the first slot 7, whereby the second rim portion 17 encloses with a facing longitudinal end side of the interlock 5 in a received state of the interlock 5 in the second slot 12 an angle α of approximately 45° (Figure 1). The first rim portion 16 provides an abutment for the opposed longitudinal end side of the interlock 5 in the received state thereof so as to provide therebetween a positive locking in sliding direction. Accordingly, the protective cover 1 is securable in sliding direction away from the first position and is movable in sliding direction from the second position towards the first position due to the transverse extension of the second rim portion 17. Particularly, by moving the protective cover 1 towards the first position, the second rim portion 17 slides with its upper portion over the merging end of the interlock 5, as the merging end does not protrude into the second slot 12, and pushes the interlock 5, by a movement of the interlock 5 around its merging end, gradually towards the inside of the second support portion 4 while further moving the protective cover 1. Thus, the interlock 5 can be fully released from the protective cover 1. Whereas, in the second position of the protective cover 1, the first rim portion 16 interacting with the interlock 5 stops a movement of the protective cover 1 in the direction leading away from the first position.

As further shown in Figures 2 and 3, the cable termination unit 100 comprises the second base 103 which provides a platform for supporting means such as a mating cable connector part connectable to the cable connector part 10 and for securing the pair of covers 101 against the first base 102 and the second base 103. The pair of covers 101 is adapted to fully cover the side of the first base 102 and of the second base 103 on which the protective devices are disposed. Each cover 101 comprises at one longitudinal end side further engagement means 104 adapted to engage the U-shaped engagement portion 15 of the protective cover 1. The further engagement means 104 provides at the longitudinal end surface side of the cover 101 an abutment for abutting against the flange 18 in the mounting state of the cover 101. The mounting state of the cover 101 corresponds to a state, in which the cover 101 is placed on the first base 102 and on the second base 103, respectively, without being secured thereto in sliding direction. The further engagement means 104 forms a U-shaped recess at the longitudinal end surface side of the cover 101, wherein the U-shaped recess provides near a cover plate side of the cover 101 a pushing portion 21 having an opening width smaller than an opening width at the lower side of the cover 101 which faces the surface side of the first base 102 and of the second base 103, respectively, in the mounted state. The pushing portion 21 is adapted to extend in the mounted state of the cover 101 through the entrance 19 into the first slot 7 and to push the interlock 5 towards the inside of the second support portion 4 to release the protective cover 1 in the first position. Accordingly, the opening width of the pushing portion 21 corresponds to a width of the second support portion 4 in a direction transverse to the sliding direction. Moreover, the pushing portion 21 has a length in direction from the cover plate side of the cover 101 towards its lower side similar to a length of the first slot 7 with the entrance 19 extending from the top of the protective cover 1 towards the lower side thereof. The portion of the further engagement means 104 with the larger opening width projects the first slot 7 towards the lower side of the protective cover 1 in the mounted state of the cover 101 to abut against the lateral sides of the protective cover 1 in the direction transverse to the sliding direction.

While mounting the cover 101 on the first base 102 and on the second base 103, respectively, the further engagement means 104 engages the engagement portion 15 of the protective cover 1 disposed in the first position, wherein the pushing portion 21 pushes the interlock 5 from the securing state to the releasing state, i.e. the pushing portion 21 pushes the interlock 5 towards the inside of the second support portion 4, thereby releasing the protective cover 1 in the first position. The engagement between the further engagement means 104 and the engagement portion 15 provides a positive locking therebetween in sliding direction of the protective cover 1. Thereafter, the cover 101 may be moved in sliding direction towards the second position as shown particularly in Figure 3, wherein the right cover 101 is mounted on the first base 102 and the second base 103 in the first position of the protective cover 1, and wherein the left cover 101 has been moved towards the second position in sliding direction. While moving the cover 101 in sliding direction, the protective cover 1 is carried by the cover 101 toward the second position. In the second position, the movement of the cover 101 and the protective cover 1 may be stopped by abutment of the first rim portion 16 with the associated longitudinal end side of the interlock 5, which snaps into the second slot 12 after the second slot 12 slides over the interlock 5.

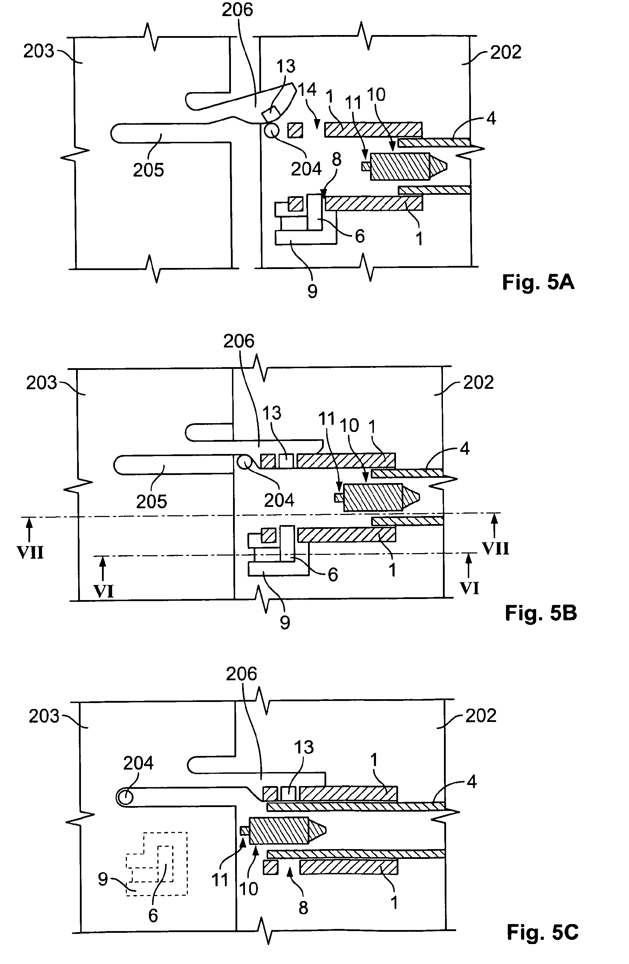

Figures 5A to 7 show schematically an alternative embodiment of a cable termination unit 200 with a protective device. Similar reference signs refer to similar parts as described above.

The cable termination unit 200 comprises a first base 202 and a second base 203 connectable to the first base 203 in sliding direction of the protective cover 1. The first base 202 supports the cable connector part 10 by the support portion 3 (not shown in Figures 5A to 7) and the protective device near a longitudinal end side adapted to be connected to the second base 203. The second base 203 is adapted to support a mating cable connector part for connecting with the cable connector part 10 supported on the first base 202. Moreover, a cover (not shown) may be provided for covering the first and second bases 202, 203, wherein the cover may be secured to the first and second bases 202, 203 in a manner as described above or in a way as commonly known in the technical field of cable termination units comprising with a cover.

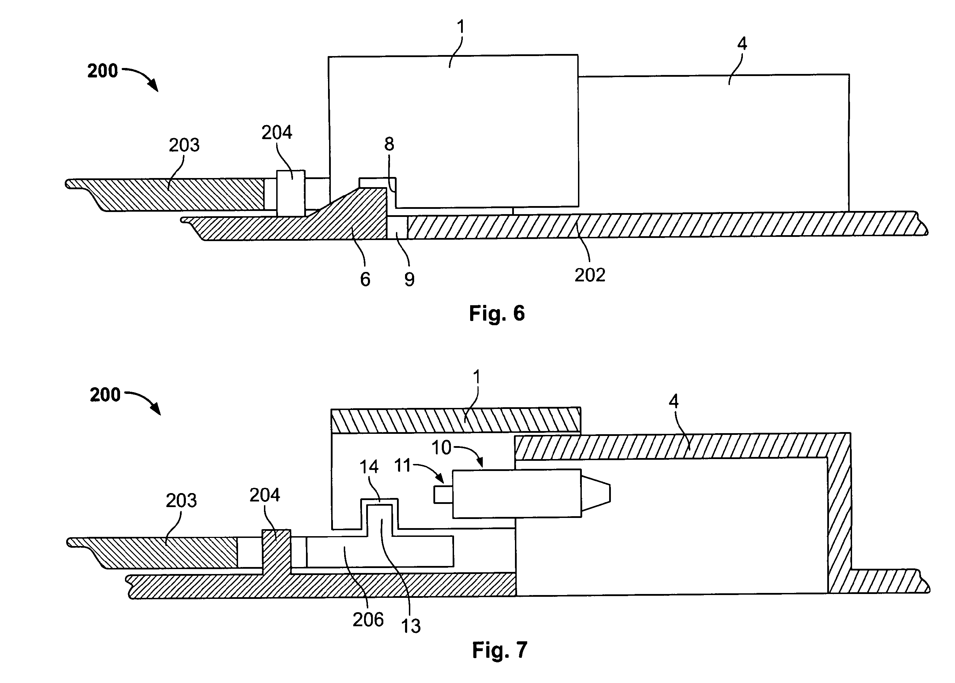

As specifically shown in Figure 7, the protective device comprises the second support portion 4 from which the connectable end portion 11 projects in sliding direction towards the longitudinal end side of the first base 202 which receives the second base 203. The second support portion 4 supports the protective cover 1 in a manner as described above. The protective cover 1 provides at its longitudinal end side which is adapted to cover the connectable end portion 11 in the first position (Figures 6 and 7), a slot 8 and an engagement portion 14, wherein the slot 8 is provided at a lower side of one lateral side of the protective cover 1 and wherein the engagement portion 14 is formed at a lower side of the opposing lateral side of the protective cover 1. The slot 8 is adapted to receive the interlock 6 which is formed by the first base 202 in the first position of the protective cover 1 so as to provide a positive locking therebetween in sliding direction. Particularly, the first base 202 comprises in an area at its longitudinal end side portion adapted to be overlapped by a longitudinal end side of the second base 203, the interlock 6 which is hinged to the first base 202 and protrudes toward the protective cover 1. The interlock 6 provides an inclined surface portion extending from one end which is hinged to the first base 202 towards the free end, wherein the free end projects a recess portion 9 in a direction towards the protective cover 1. The free end of the interlock 6 comprises a protruding portion which protrudes from the inclined surface in the direction transverse to the sliding direction toward the cable connector part 10 and is adapted to engage the slot 8 in the first position of the protective cover 1. The interlock 6 is elastically movable with its free end around the hinged end connected to the first base 202. Accordingly, by connecting the first base 202 to the second base 203, wherein the longitudinal end side of the second base 203 slides over the associated longitudinal end side of the first base 202, the second base 203 slides on the inclined surface of the interlock 6, thereby pushing the interlock 6 away from the protective cover 1 to automatically release the protective cover 1 in the first position. In the connected state of the first base 202 to the second base 203, the recess portion 9 and the interlock 6 are fully covered by the second base 203 as particularly shown in Figure 5C.

The first base 202 comprises between a longitudinal end side of the protective cover 1 secured in the first position and the longitudinal end side of the first base 202, a guiding protrusion 204, which projects the surface of the first base 202 on the side supporting the protective device. Particularly, the guiding protrusion 204 is provided in sliding direction in elongation of the engagement portion 14. Moreover, the second base 203 comprises a guiding recess 205 for guiding the guiding protrusion 204 while moving the first base 202 relatively to the second base 203. The guiding recess 205 co-operates with an extension arm 206 which projects the longitudinal end side of the second base 203 adapted to engage the longitudinal end side portion of the first base 202. Particularly, the extension arm 206 forms an elongation of the border defining the guiding recess 205 in a direction transverse to the sliding direction. The extension arm 206 is sandwiched in the direction transverse to the sliding direction by the guiding recess 205 and a further recess having a longitudinal length smaller than the guiding recess 205. Thereby, the extension arm 206 is elastically movable in the direction transverse to the sliding direction. The extension arm 206 comprises at its free end side a flat support from which further engagement means 13 protrude towards the upper side of the protective cover 1. The further engagement means 13 is adapted to engage the engagement portion 14 provided with the protective cover 1. Moreover, the support is formed of a shape which partially overlaps with a guiding path of the guiding recess 205 when viewed from the sliding direction side, wherein the portion overlapping the guiding path of the guiding recess 205 is formed with a radius adapted to co-operate with an outer shape of the guiding protrusion 204 to allow a guided movement of the extension arm 206 by the guiding protrusion 204 in the transverse direction, while moving the first base 202 and the second base 203 in sliding direction relatively to each other.

Particularly, as shown in Figure 5A, the first base 202 comprising the protective cover 1 secured in the first position by the interlock 6 and the second base 203 are moved towards each other, wherein the guiding protrusion 204 abuts against the portion of the extension arm 206 overlapping the guiding path of the guiding recess 205 when viewed from the sliding direction side, whereby the extension arm 206 is moved away from the protective cover 1 in the direction transverse to the sliding direction. After the guiding protrusion 204 passes the support of the extension arm 206, the further engagement means 13 engages automatically the engagement portion 14 of the protective cover 1 (Figure 5B). The further engagement means 13 fits into the engagement portion 14 in longitudinal direction. Accordingly, positive locking is provided between the further engagement means 13 and the engagement portion 14 in sliding direction. At the same time, the longitudinal end side of the second base 203 slides over the inclined surface portion of the interlock 6, thereby automatically moving the interlock 6 from its securing state, i.e. from the engaged state with the slot 8, to the releasing state, i.e. to the disengaged state of the interlock 6. The protective cover 1 is thereby released in the first position and is freely movable in sliding direction. By further movement of the first base 202 and the second base 203 towards each other in the sliding direction, the guiding protrusion 204 is fully received and guided by the guiding recess 205, thereby aligning the first base 202 with respect to the second base 203. Furthermore, the extension arm 206 pushes the protective cover 1 towards the second position. In the second position of the protective cover 1 (Figure 5C), the guiding protrusion 204 abuts against a longitudinal end side of the guiding recess 205, thereby preventing a further movement of the first base 202 and the second base 203 towards each other. Moreover, the extension arm 206 with its further engagement means 13 secures the protective cover 1 in the second position by means of positive locking formed therebetween in sliding direction. Accordingly, the cable connector part 10 is accessibly exposed in the second position and may be further handled.

According to the above-described preferred embodiments, the inventive protective device can be provided for different cable termination units, wherein one cable termination unit is based on the principle of automatically moving the protective cover of the protective device from a first position to a second position by connection of a cover to the base, and wherein a further cable termination unit is based on the principle on automatically moving the protective cover from the first position to the second position by connection of two bases with each other. Furthermore, the protective cover is automatically movable from the second position to the first position by disconnecting the cover or the second base, respectively. Thereby, a cable connector part supportable by the protective device may be reliably protected during handling of the protective device. Additionally, an assembling and disassembling of the cable termination unit may be simplified.

The present invention has been described with reference to specific preferred embodiments. However, a combination of one or more parts as described along with one preferred embodiment with one or more parts as described along with another described preferred embodiment is also feasible.

### Reference List

- 1: protective cover
- 3: first support portion
- 4: second support portion
- 5, 6: interlock
- 7, 8: first slot
- 9: recess portion
- 10: cable connector part
- 11: connectable end portion
- 12: second slot
- 13: pin
- 14, 15: engagement portion
- 16: first rim portion
- 17: second rim portion
- 18: flange
- 19: entrance
- 20: further flange
- 21: pushing portion
- 100, 200: cable termination unit
- 101: cover
- 102, 202: first base
- 103, 203: second base
- 104: further engagement means
- 105: first passageway
- 106: second passageway
- 107: holding means
- 204: guiding protrusion
- 205: guiding recess
- 206: extension arm
- 207: bottle-shaped recess

## Claims

1. A protective device for a cable connector part (10), comprising
a protective cover (1) adapted to be movable between a first position for protecting the cable connector part (10) and a second position for accessibly exposing at least a connectable end portion (11) of the cable connector part (10), wherein the protective cover (1) is adapted to be releasably securable at least in the first position,
provides in sliding direction an opening, through which a cable connector end portion of the cable connector part (10) passes when the protective cover (1) is moved from the first to the second position, and has a first slot (7, 8) adapted to releasably receive an interlock (5, 6) in the first position to prevent sliding; a stationary support (3, 4) comprising a first support portion (3) for supporting the cable connector part (10) and a second support portion (4) for slidably supporting the protective cover (1) between the first position and the second position; and
positive locking means (5, 7; 6, 8) effective between the protective cover (1) and the stationary support (3, 4) to secure the protective cover (1) in the first position,
**characterized in that** the stationary support (3, 4) provides the interlock (5, 6) hinged to
the stationary support (3, 4) and elastically movable transverse to the sliding direction such that a free end of the interlock (5, 6) is biased toward the protective cover (1).

2. The protective device according to claim 1, **characterized in that** the stationary support (3, 4) and the protective cover (1) provide stop means (5, 12) adapted to co-operate with each other in the second position so as to stop a sliding movement of the protective cover (1).

3. The protective device according to any one of claims 1 or 2, **characterized in that** the protective cover (1) comprises a second slot (12) adjacent to the first slot (7), wherein the second slot (12) provides a stop for the interlock (5) to prevent sliding movement of the protective cover (1) in the second position.

4. The protective device according to claim 3, **characterized in that** a rim portion (17) of the second slot (12) is inclined relatively to an opposing edge of the interlock (5) by an angle (α) larger than 15° and smaller than 75°.

5. The protective device according to claim 3 or 4, **characterized in that** the interlock (5, 6) is adapted to fit in the first position into the first slot (7) and/or in the second position into the second slot (12) so as to provide an additional positive locking between the protective cover (1) and the stationary support (3, 4) in a direction transverse to the sliding direction.

6. The protective device according to any one of the preceding claims, **characterized in that** the protective cover (1) comprises an engagement portion (14; 15) engageable from an outer side of the protective cover (1) by further engagement means (13; 104) to provide therebetween a positive locking in sliding direction.

7. A cable termination unit (100; 200) comprising
a first base (102; 202) for supporting at least one cable connector part (10), and
a second base (103; 203) arranged adjacent to the first base (102; 202) for supporting means connectable to the at least one cable connector part (10),
**characterized in**
**that** the cable termination unit (100; 200) comprises at least one protective device according to any one of the preceding claims, wherein the stationary support (3, 4) of the at least one protective device is connected to or forms a part of the first base (102; 202).

8. The cable termination unit (100) according to claim 7, **characterized in that** the cable termination unit (100) comprises a protective device according to claim 6, and a cover (101) securable to at least one of the first base (102) or the second base (103) and which provides further engagement means (104) adapted to engage the engagement portion (15) of the protective cover (1) in a mounted state of the cover (101) so as to transmit a sliding movement of the cover (101) to the protective cover (1).

9. The cable termination unit (100) according to claim 8, **characterized in that** the cable termination unit (100) comprises a protective device according to claim 6 in combination with any one of claims 1 to 5, wherein the first slot (7) provides an entrance (19) for a pushing portion (21) of the cover (101), wherein the pushing portion (21) is adapted to extend in the mounted state of the cover (101) into the first slot (7) so as to push the interlock (5) in a direction transverse to the sliding direction, thereby releasing the interlock (5) in the first position of the protective cover (1).

10. The cable termination unit (200) according to claim 7, **characterized in that** the cable termination unit (200) comprises a protective device according to claim 6, and that the first base (202) and the second base (203) are formed of separate parts connectable to each other in sliding direction and which at least partially overlap each other in sliding direction, wherein the second base (203) comprises an extension arm (206) projecting an axial end side of the second base (203) in sliding direction and being elastically movable in a direction transverse thereto, wherein a free end side of the extension arm (206) is provided with further engagement means (13) adapted to engage the engagement portion (14) of the protective cover (1) so as to transmit a sliding movement of the first base (202) and/or the second base (203) to the protective cover (1).

11. The cable termination unit (200) according to claim 10, **characterized in that** the first base (202) is projected by a guiding protrusion (204) arranged between the axial end side of the first base (202) and an axial end side of the protective cover (1) secured in the first position, and that the second base (203) comprises a guiding recess (205) adapted to guide the guiding protrusion (204) in sliding direction, wherein the extension arm (206) has an axial free end side with an outer shape adapted to partially overlap a guiding path of the guiding recess (205) for elastically urging the extension arm (206) transverse to the sliding direction to engage the further engagement means (13) with the engagement portion (14) while connection of the first base (202) with the second base (203) and/or to disengage the further engagement means (13) from the engagement portion (14) while disconnection of the first base (202) and the second base (203).

12. The cable termination unit (200) according to claim 10 or 11, **characterized in that** the cable termination unit (200) comprises a protective device according to claims 1 and 6, wherein the first base (202) provides in an area to be overlapped by the second base (203) the interlock (6), wherein the interlock (6) is hinged to the first base (202) and co-operates with the second base (203) while connection of the first base (202) with the second base (203) to release the interlock (6) from the protective cover (1).

## Patentansprüche

1. Schutzvorrichtung für einen Kabelverbinderteil (10), die umfasst:
eine Schutzabdeckung (1), die so eingerichtet ist, dass sie zwischen einer ersten Position, in der der Kabelverbinderteil (10) geschützt wird, und einer zweiten Position bewegt werden kann, in der wenigstens ein Endabschnitt (11) des Kabelverbinderteils (10), der verbunden werden kann, zugänglich freigelegt ist, wobei die Schutzabdeckung (1) so eingerichtet ist, dass sie wenigstens in der ersten Position lösbar gesichert werden kann, sie in Verschieberichtung eine Öffnung aufweist, über die ein Kabelverbinder-Endabschnitt des Kabelverbinderteils (10) hindurch tritt, wenn die Schutzabdeckung (1) von der ersten Position an die zweite Position bewegt wird, und sie einen ersten Schlitz (7, 8) aufweist, der so eingerichtet ist, dass er in der ersten Position eine Verriegelung (5, 6) lösbar aufnimmt, um Verschieben zu verhindern;
einen stationären Träger (3, 4), der einen ersten Trägerabschnitt (3), der den Kabelverbinderteil (10) trägt, sowie einen zweiten Trägerabschnitt (4), umfasst, der die Schutzabdeckung (1) so trägt, dass sie zwischen der ersten Position und der zweiten Position verschoben werden kann; und
eine formschlüssige Arretiereinrichtung (5, 7; 6, 8), die zwischen der Schutzabdeckung (1) und dem stationären Träger (3, 4) wirkt und die Schutzabdeckung (1) in der ersten Position sichert,
**dadurch gekennzeichnet, dass** der stationäre Träger (3, 4) die Verriegelung (5, 6) aufweist, die an dem stationären Träger (3, 4) angelenkt ist und quer zu der Verschieberichtung elastisch so bewegt werden kann, dass ein freies Ende der Verriegelung (5, 6) auf die Schutzabdeckung (1) zu gespannt wird.

2. Schutzvorrichtung nach Anspruch 1, **dadurch gekennzeichnet, dass** der stationäre Träger (3, 4) und die Schutzabdeckung (1) Anschlageinrichtungen (5, 12) aufweisen, die so eingerichtet sind, dass sie in der zweiten Position so zusammenwirken, dass sie eine Verschiebebewegung der Schutzabdeckung (1) zum Halten bringen.

3. Schutzvorrichtung nach einem der Ansprüche 1 oder 2, **dadurch gekennzeichnet, dass** die Schutzabdeckung (1) einen an den ersten Schlitz (7) angrenzenden zweiten Schlitz (12) umfasst, wobei der zweite Schlitz (12) einen Anschlag für die Verriegelung (5) bildet, um Verschiebebewegung der Schutzabdeckung (1) in der zweiten Position zu verhindern.

4. Schutzvorrichtung nach Anspruch 3, **dadurch gekennzeichnet, dass** ein Randabschnitt (17) des zweiten Schlitzes (12) relativ zu einer gegenüberliegenden Kante der Verriegelung (5) um einen Winkel (α) geneigt ist, der größer als 15° und kleiner als 75° ist.

5. Schutzvorrichtung nach Anspruch 3 oder 4, **dadurch gekennzeichnet, dass** die Verriegelung (5, 6) so eingerichtet ist, dass sie in der ersten Position in den ersten Schlitz (7) und/oder in der zweiten Position in den zweiten Schlitz (12) passt, um eine zusätzliche formschlüssige Arretierung zwischen der Schutzabdeckung (1) und dem stationären Träger (3, 4) in einer Richtung quer zu der Verschieberichtung zu schaffen.

6. Schutzvorrichtung nach einem der vorangehenden Ansprüche, **dadurch gekennzeichnet, dass** die Schutzabdeckung (1) einen Eingriffsabschnitt (14; 15) umfasst, mit dem eine weitere Eingriffseinrichtung (13; 104) von einer Außenseite der Schutzabdeckung (1) in Eingriff gebracht werden kann, um eine formschlüssige Arretierung in Verschieberichtung zwischen ihnen zu schaffen.

7. Kabelabschluss-Einheit (100; 200), die umfasst:
einen ersten Träger (102; 202), der wenigstens einen Kabelverbinderteil (10) trägt, sowie
einen zweiten Träger (103; 203), der an den ersten Träger (102; 202) angrenzend angeordnet ist und eine Einrichtung trägt, die mit dem wenigstens einen Kabelverbinderteil (10) verbunden werden kann,
**dadurch gekennzeichnet, dass**
die Kabelabschluss-Einheit (100; 200) wenigstens eine Schutzvorrichtung nach einem der vorangehenden Ansprüche umfasst, wobei der stationäre Träger (3, 4) der wenigstens einen Schutzvorrichtung mit dem ersten Träger (102; 202) verbunden ist oder einen Teil desselben bildet.

8. Kabelabschluss-Einheit (100) nach Anspruch 7, **dadurch gekennzeichnet, dass** die Kabelabschluss-Einheit (100) eine Schutzvorrichtung nach Anspruch 6 und eine Abdeckung (101) umfasst, die an dem ersten Träger (102) oder/und dem zweiten Träger (103) gesichert werden kann und die eine weitere Eingriffseinrichtung (104) aufweist, die so eingerichtet ist, dass sie in einem angebrachten Zustand der Abdeckung (101) mit dem Eingriffsabschnitt (15) der Schutzabdeckung (1) in Eingriff ist, um eine Verschiebebewegung der Abdeckung (101) auf die Schutzabdeckung (1) zu übertragen.

9. Kabelabschluss-Einheit (100) nach Anspruch 8, **dadurch gekennzeichnet, dass** die Kabelabschluss-Einheit (100) eine Schutzvorrichtung nach Anspruch 6 in Kombination mit einem der Ansprüche 1 bis 5 umfasst, wobei der erste Schlitz (7) einen Eintritt (19) für einen Drückabschnitt (21) der Abdeckung (101) aufweist und der Drückabschnitt (21) so eingerichtet ist, dass er sich in dem angebrachten Zustand der Abdeckung (101) in den ersten Schlitz (7) hinein erstreckt und die Verriegelung (5) in einer Richtung quer zu der Verschieberichtung drückt und so die Verriegelung (5) in der ersten Position der Schutzabdeckung (1) löst.

10. Kabelabschluss-Einheit (200) nach Anspruch 7, **dadurch gekennzeichnet, dass** die Kabelabschluss-Einheit (200) eine Schutzvorrichtung nach Anspruch 6 umfasst und dass der erste Träger (202) sowie der zweite Träger (203) aus separaten Teilen bestehen, die in Verschieberichtung miteinander verbunden werden können und die einander in Verschieberichtung wenigstens teilweise überlappen, wobei der zweite Träger (203) einen Verlängerungsarm (206) umfasst, durch den eine axiale Endseite des zweiten Trägers (203) in Verschieberichtung vorsteht, und der in einer Richtung quer dazu elastisch bewegt werden kann, wobei eine freie Endseite des Verlängerungsarms (206) mit einer weiteren Eingriffseinrichtung (13) versehen ist, die so eingerichtet ist, dass sie mit dem Eingriffsabschnitt (14) der Schutzabdeckung (1) in Eingriff kommt, um eine Verschiebebewegung des ersten Trägers (202) und/oder des zweiten Trägers (203) auf die Schutzabdeckung (1) zu übertragen.

11. Kabelabschluss-Einheit (200) nach Anspruch 1, **dadurch gekennzeichnet, dass** der erste Träger (202) über einen Führungsvorsprung (204) vorsteht, der zwischen der axialen Endseite des ersten Trägers (202) und einer axialen Endseite der Schutzabdeckung (1) angeordnet ist, die in der ersten Position gesichert ist, und das der zweite Träger (203) eine Führungsaussparung umfasst, die so eingerichtet ist, dass sie den Führungsvorsprung (204) in Verschieberichtung führt, wobei der Verlängerungsarm (206) eine axiale freie Endseite mit einer Außenform hat, die so eingerichtet ist, dass sie einen Führungsweg der Führungsaussparung (205) teilweise überlappt, um den Verlängerungsarm (206) elastisch quer zu der Verschieberichtung zu drücken und bei Verbindung des ersten Trägers (202) mit dem zweiten Träger (203) die weitere Eingriffseinrichtung (13) mit dem Eingriffsabschnitt (14) in Eingriff zu bringen und/oder bei Trennung des ersten Trägers (202) und des zweiten Trägers (203) die weitere Eingriffseinrichtung (13) von dem Eingriffsabschnitt (14) zu lösen.

12. Kabelabschluss-Einheit (200) nach Anspruch 10 oder 11, **dadurch gekennzeichnet, dass** die Kabelabschluss-Einheit (200) eine Schutzvorrichtung nach den Ansprüchen 1 und 6 umfasst, wobei der erste Träger (202) in einem Bereich, der von dem zweiten Träger (203) überlappt wird, die Verriegelung (6) aufweist, und die Verriegelung (6) an dem ersten Träger (202) angelenkt ist und bei Verbindung des ersten Trägers (202) mit dem zweiten Träger (203) mit dem zweiten Träger (203) zusammenwirkt, um die Verriegelung (6) von der Schutzabdeckung (1) zu lösen.

## Revendications

1. Dispositif protecteur pour partie de connecteur de câble (10), comprenant
un couvercle protecteur (1) conçu pour être mobile entre une première position permettant de protéger la partie de connecteur de câble (10) et une seconde position permettant d'exposer et de rendre accessible au moins une partie d'extrémité (11) raccordable de la partie de connecteur de câble (10), le couvercle protecteur (1) étant conçu pour pouvoir être immobilisé, de manière libérable, au moins dans la première position, fournissant, dans une direction de coulissement, une ouverture à travers laquelle passe une partie d'extrémité de connecteur de câble de la partie de connecteur de câble (10) lorsque le couvercle protecteur (1) est déplacé de la première vers la seconde position, et étant pourvu d'une première fente (7, 8) conçue pour recevoir de manière libérable un dispositif de verrouillage (5, 6) dans la première position pour empêcher un coulissement ;
un support fixe (3, 4) comprenant une première partie de support (3) destinée à supporter la partie de connecteur de câble (10) et une seconde partie de support (4) pour supporter le couvercle protecteur (1) de manière coulissante entre la première position et la seconde position ; et
un moyen de verrouillage positif (5, 7 ; 6, 8) agissant entre le couvercle protecteur (1) et le support fixe (3, 4) pour immobiliser le couvercle protecteur (1) dans la première position,
**caractérisé en ce que** le support fixe (3, 4) fournit le dispositif de verrouillage (5, 6) articulé sur le support fixe (3, 4) et mobile élastiquement de manière transversale à la direction de coulissement, de façon qu'une extrémité libre du dispositif de verrouillage (5, 6) soit contrainte vers le couvercle protecteur (1).

2. Dispositif protecteur selon la revendication 1, **caractérisé en ce que** le support fixe (3, 4) et le couvercle protecteur (1) fournissent des moyens d'arrêt (5, 12) conçus pour coopérer l'un avec l'autre dans la seconde position de manière à bloquer un mouvement coulissant du couvercle protecteur (1).

3. Dispositif protecteur selon l'une quelconque des revendications 1 ou 2, **caractérisé en ce que** le couvercle protecteur (1) comporte une seconde fente (12) adjacente à la première fente (7), la seconde fente (12) fournissant un arrêt pour le dispositif de verrouillage (5) pour empêcher un mouvement coulissant du couvercle protecteur (1) dans la seconde position.

4. Dispositif protecteur selon la revendication 3, **caractérisé en ce qu'**une partie de bordure (17) de la seconde fente (12) est inclinée par rapport à un bord opposé du dispositif de verrouillage (5) selon un angle (α) supérieur à 15° et inférieur à 75°.

5. Dispositif protecteur selon la revendication 3 ou 4, **caractérisé en ce que** le dispositif de verrouillage (5, 6) est conçu pour s'insérer, dans !a première position, dans la première fente (7) et/ou, dans la seconde position, dans la seconde fente (12), de façon à fournir un verrouillage positif supplémentaire entre le couvercle protecteur (1) et le support fixe (3, 4) dans une direction transversale à la direction de coulissement.

6. Dispositif protecteur selon l'une quelconque des revendications précédentes, **caractérisé en ce que** le couvercle protecteur (1) comprend une partie d'engagement (14 ; 15) avec laquelle un moyen d'engagement supplémentaire (13 ; 104) peut entrer en prise depuis un côté extérieur du couvercle protecteur (1) pour fournir entre eux un verrouillage positif dans la direction de coulissement.

7. Unité d'extrémité de câble (100 ; 200) comprenant :
une première base (102 ; 202) destinée à supporter au moins une partie de connecteur de câble (10) et
une seconde base (103 ; 203) agencée adjacente à la première base (102 ; 202) pour supporter un moyen pouvant être raccordé à l'au moins une partie de connecteur de câble (10),
**caractérisée en ce que** l'unité d'extrémité de câble (100 ; 200) comprend au moins un dispositif protecteur selon l'une quelconque des revendications précédentes, le support fixe (3, 4) de l'au moins un dispositif protecteur étant relié à la première base (102 ; 202) ou faisant partie de cette dernière.

8. Unité d'extrémité de câble (100) selon la revendication 7, **caractérisée en ce que** l'unité d'extrémité de câble (100) comprend un dispositif protecteur selon la revendication 6 et un cache (101) pouvant être fixé sur au moins la première base (102) ou la seconde base (103) et qui fournit un moyen d'engagement supplémentaire (104) conçu pour entrer en prise avec la partie d'engagement (15) du couvercle protecteur (1), dans l'état monté du couvercle (101), de manière à transmettre un mouvement coulissant du cache (101) au couvercle protecteur (1).

9. Unité d'extrémité de câble (100) selon la revendication 8, **caractérisée en ce que** l'unité d'extrémité de câble (100) comprend un dispositif protecteur selon la revendication 6 en association avec l'une quelconque des revendications 1 à 5, la première fente (7) fournissant une entrée (19) pour une partie de poussée (21) du cache (101), la partie de poussée (21) étant conçue pour s'étendre, dans l'état monté du cache (101), dans la première fente (7), de manière à pousser le dispositif de verrouillage (5) dans une direction transversale à la direction de coulissement, permettant de libérer le dispositif de verrouillage (5) dans la première position du couvercle protecteur (1).

10. Unité d'extrémité de câble (200) selon la revendication 7, **caractérisée en ce que** l'unité d'extrémité de câble (200) comprend un dispositif protecteur selon la revendication 6 et **en ce que** la première base (202) et la seconde base (203) sont formées de parties séparées pouvant être connectées l'une à l'autre dans la direction de coulissement et se recouvrant au moins partiellement dans la direction de coulissement, la seconde base (203) comprenant un bras de prolongement (206) saillant sur un côté d'extrémité axiale de la seconde base (203) dans la direction de coulissement et mobile élastiquement dans une direction transversale à la direction de coulissement, un côté d'extrémité libre du bras de prolongement (206) étant pourvu d'un moyen d'engagement supplémentaire (13) conçu pour entrer en prise avec la partie d'engagement (14) du couvercle protecteur (1), de manière à transmettre un mouvement coulissant de la première base (202) et/ou de la seconde base (203) au couvercle protecteur (1).

11. Unité d'extrémité de câble (200) selon la revendication 10, **caractérisée en ce que** la première base (202) est pourvue d'une saillie de guidage (204) située entre le côté d'extrémité axiale de la première base (202) et un côté d'extrémité axiale du couvercle protecteur (1) immobilisé dans la première position, et **en ce que** la seconde base (203) comprend un évidement de guidage (205) conçu pour guider la saillie de guidage (204) dans la direction de coulissement, le bras de prolongement (206) ayant un côté d'extrémité libre axiale dont la forme extérieure est conçue pour recouvrir partiellement un chemin de guidage de l'évidement de guidage (205) pour pousser élastiquement le bras de prolongement (206) transversalement à la direction de coulissement pour que le moyen d'engagement supplémentaire (13) entre en prise avec la partie d'engagement (14) pendant la connexion de la première base (202) à la seconde base (203) et/ou pour que le moyen d'engagement supplémentaire (13) se libère de la partie d'engagement (14) pendant la déconnexion de la première base (202) et de la seconde base (203).

12. Unité d'extrémité de câble (200) selon la revendication 10 ou 11, **caractérisée en ce que** l'unité d'extrémité de câble (200) comprend un dispositif protecteur selon les revendications 1 et 6, la première base (202) étant pourvue, dans une zone destinée à être recouverte par la seconde base (203), du dispositif de verrouillage (6), le dispositif de verrouillage (6) étant articulé sur la première base (202) et coopérant avec la seconde base (203) pendant la connexion de la première base (202) à la seconde base (203) pour libérer le dispositif de verrouillage (6) du couvercle protecteur (1).
